Europäisches Patentamt

European Patent Office

Office européen des brevets

(19)

(11) Publication number: **0 313 037**
**A2**

(12) # EUROPEAN PATENT APPLICATION

(21) Application number: **88117445.2**

(22) Date of filing: **19.10.88**

(51) Int. Cl.⁴: **A47J 37/12 , A47J 37/04**

The title of the invention has been amended (Guidelines for Examination in the EPO, A-III, 7.3).

(30) Priority: **21.10.87 CA 549907**

(43) Date of publication of application:
**26.04.89 Bulletin 89/17**

(84) Designated Contracting States:
**AT DE ES FR GB IT**

(71) Applicant: **METATRON INVESTMENTS INC.**
**715 avenue Halpern**
**Dorval Quebec H9P 1G5(CA)**

(72) Inventor: **Csabai, Julius S.**
**22 Normandy**
**CDN - Baie D'Urfé Québec, H9P 1G5(CA)**

(74) Representative: **Dellicour, Paul**
**Office de Brevets E. Dellicour rue Fabry**
**18/012**
**B-4000 Liège(BE)**

(54) **Revolving basket for a food cooking apparatus.**

(57) The present invention relates to an apparatus for cooking predetermined measured quantities of hot food products. This apparatus can be used in conjunction with a vending machine to prepare fat fried food products such as fish, French fried potatoes, potato chips, chicken fingers, etc., and comprises a wheel having a certain number of partitions so as to receive measured portions of various food products, to hold them during frying, to cook them progressively and to discharge them into the food dispensing chute or the like at the end of the cooking cycle.

Fig. 1

**Revolving basket**

FIELD OF THE INVENTION

The present invention relates to an apparatus for cooking predetermined measured quantities of hot food products. This apparatus can be used in conjunction with a vending machine to prepare fat fried food products such as fish, French fried potatoes, potato chips, chicken fingers, etc.

DESCRIPTION OF PRIOR ART

Various solutions have already been proposed for apparatuses for cooking hot food products such as fish, French fried potatoes, potato chips, chicken fingers, etc., but up to now, all known devices of this kind have drawbacks of such nature as to preclude their general use.

Some have not been successful due to the fact that the hot food products must be supplied continuously in regular succession and it is of no use in cases where the demand comes from time to time, at moments irregularly spaced in time.

Others devices or apparatuses have proven too expen sive in operation or too high in initial cost.

Moreover, a general drawback of the apparatuses of this kind is the time taken to cook said hot food products which is of no use in a vending machine.

The Canadian patent no. 958,242 (MASCRET) describes an apparatus for cooking and distributing measured quantities of hot food products and comprises a tank for containing the cooking liquid, a perforated basket, a device for imparting rotation of said perforated basket, a magazine for containing a reserve of the food product to be cooked and means for receiving a stack of receptacles each intended to receive a cooked portion of product.

The device for imparting rotation of the basket is made of an abutment which is capable of entering into the basket through an elongated slit in the cylindrical wall of the basket, and of projecting into one of the sectors of the bladed wheel.

The main drawback of this system is that it is difficult to obtain a perfect alignment of the partition walls and the chute, thus the hot food products tend to stick to the partition wall.

Furthermore, particles such as French fries potatoes tend to clog the elongated slit, which is supposed to receive the abutment, thus the latter has difficulties to enter into said slit and, therefore, the rotation of said basket is difficult.

The U.S. patent no : 3.474.726 (Curtin) shows a machine for use with deep frying wells or equivalent vessels containing deep fat and comprising a drum defined by a pair of coaxially spaced dics transversely interconnected by a pluralites of circumferentially spaced radial vanes.

The apparatus is particularly well suited to the mass production of fried food product but same must be used as a continuous conveyor.

Finally, the machine of the present invention differs from machines of the prior art, such as those normally referred to as vending machines, in that it is capable of being feed with frozen products, cooking said products and delivering them to the customer in less time that is usually taken, because same are progressively cooked.

OBJETS OF THE PRESENT INVENTION

The first objet of the present invention is to provide a hot food cooking apparatus which is highly efficient and can be used in all circumstances without difficulties and which will operate with a minimum of attention.

A second objet of the present invention is to provide an apparatus which will provide quantity production thereof with uniform quality.

A third objet of the present invention is to provide an apparatus which is capable of efficiently handling several different types of food products.

A fourth objet of the present invention is to provide a new and improved rotary fryer having means to achieve such rotation and to assure complete alignment of the basket chute with the outer structure so as to avoid all problems that such disalignment may cause.

A fifth objet of the present invention is to provide to the cooking industry a complete apparatus which is also simple and can be used or installed in a vending machine as well as in any other dispensing apparatus.

A sixth objet of the present invention is to provide an apparatus which is easily adaptable to use with existing deep fat frying wells or equivalent frying basins.

It is a general objetct of the present invention to provide a vending machine which meets the aforesaid requirements and comprises a tilting mechanism made of an elongated arm fixed to a rotating basket. Said rotating basket is constructed from two circular perforated plates which are held together by a plurality of perforated partition walls, wherein said rotating basket is immersed and withdrawn from a tank containing cooking oil or fat by means of said tilting mechanism.

## DESCRIPTION OF THE DRAWINGS

Other objects will become apparent upon reading the following disclosure and examining the drawings to which it refers, in which :

Figure 1 is a side view of a preferred embodiment of the present invention ;

Figure 2 is a perspective view of the revolving basket illustrated in Figure 1 ;

Figure 3 is a view showing the shaft used to limit the rotation of the revolving basket of Figure 2.

Figure 4 is a side view of shaft of figure 3 along with the corresponding hair-pin. Said shaft is shown with different grooved ends.

## DESCRIPTION OF A PREFERRED EMBODIMENT

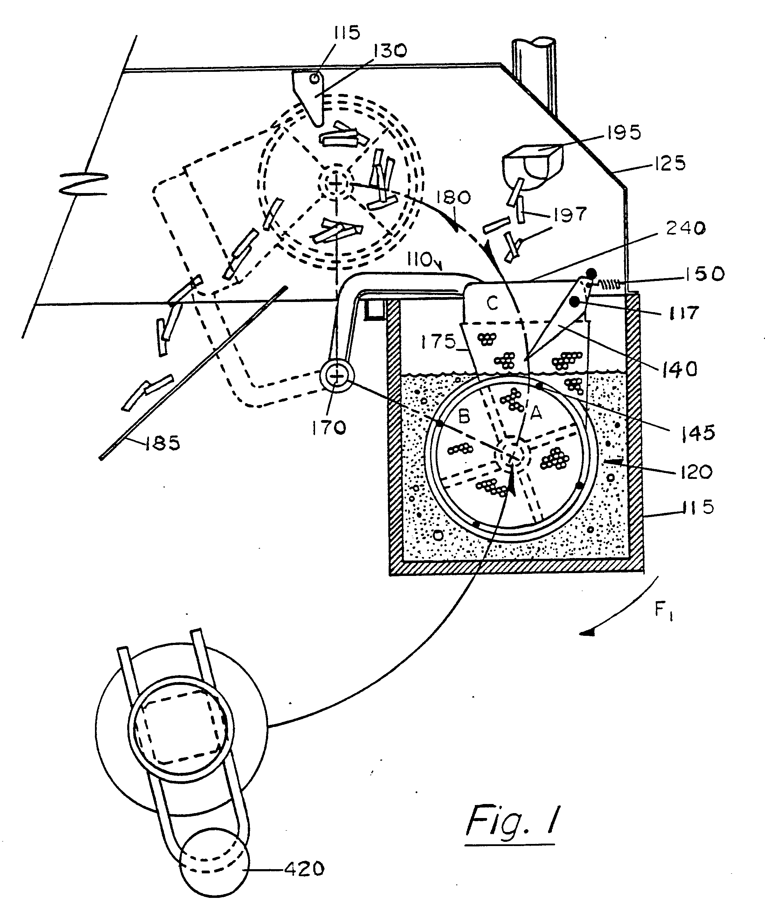

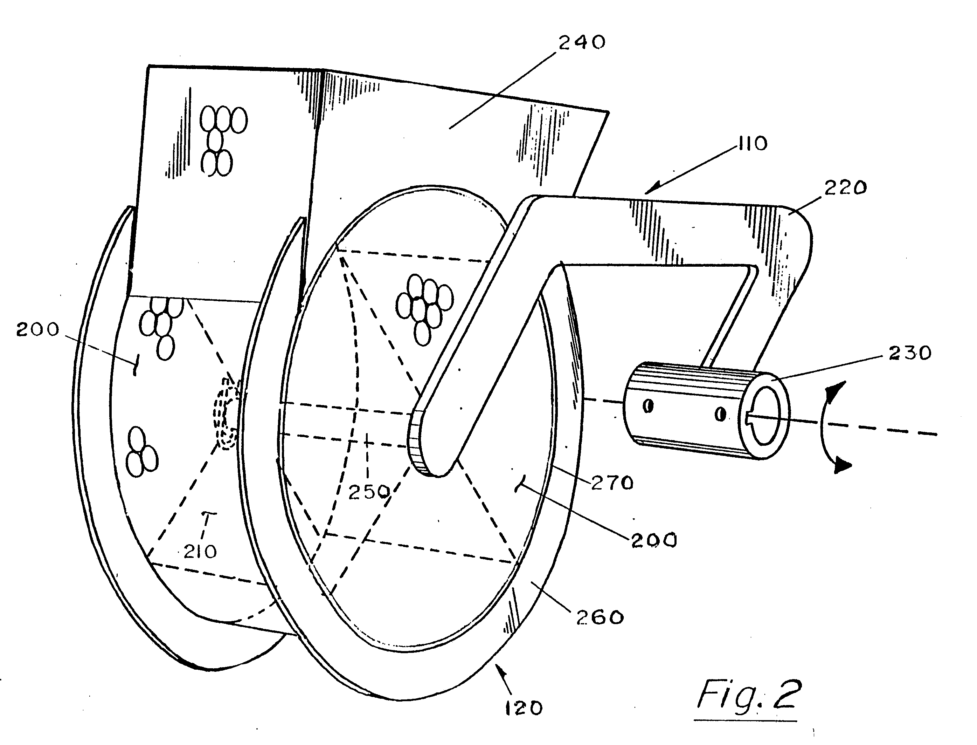

Refering now to Figure 1, the apparatus comprises two main parts : a tilting mechanism generally referred to as number 110 ; and a rotating basket 120. The rotating basket is constructed from two circular, perforated plates 200 (as best shown in Figure 2) which are held together by four perforated partition walls 210. This way, four compartments are formed in which the food product is confined during various stages of the cooking process.

These circular plates 200 and partition walls are concentrically welded to a tubular shaft 250.

The said tilting mechanism, 110, comprises a "U"-shaped, rigid arm 220, and a solid hub 230 which is bolted to a shaft (not shown) of a motor (not shown) to permit withdrawing of said rotating basket 120.

Said rotating basket 120 comprises an inlet chute 240 of a generally rectangular configuration and a retaining ring 260. The lower part of the chute 240 is connected to a basket hoop 270 which establishes a cylindrical body in which the above mentioned ro tating basket is accommodated. The retaining ring 260 is welded to the outside surface of hoop 270 in order to ensure perfectly circular shape for the trouble-free rotation of the basket.

At the commencement of the cooking cycle, the basket assembly rests fully immersed in the oil or other similar substance as illustrated with the solid lines in Figure 1. The entrance edges of the inlet chute 240 are in a horizontal position and the compartment (A) is aligned with the lower chute opening (C). In this way the food product can be directed into this enclosure for the first cooking cycle, which lasts 15-30 seconds, depending on the nature and thickness of the product used.

After the cooking is completed, the basket assembly starts its rotary motion around the main shaft's center line 170 on a 115 degrees circular path 180.

When the right hand locator pin 145 comes into contact with lower indexing finger 140, the rotating part of the basket starts revolving around the shaft 250 (as shown in figure 2). Said indexing finger 140 is held on a predetermined position by a tension spring 150 and is pivotably secured to the fume collector 125 by means of a pin 117. After a turn of approximately 45 degrees, the hair-pin spring 410 takes over and completes said turn to a 90 degrees revolving motion. In this way the four times cooked product in compartment (B) is moved in line with the chute's opening, (C), and the last introduced portion of product (A) is moved away from the chute in a clockwise direction (F1). The uncooked portion of a new product (such as French Fries potatoes 197) is introduced into compartment (A) by means of the chute 195.

As the basket with all the compartments full of food products emerges out of the oil tank 115, it stops for a few seconds to shake off the free oil by induced vibration which is created by an electrically driven vibrator or similar vibrator means connected to the arm 220 of the tilting mechanism.

When the discharge lip 175 of the chute reaches a 45 degrees slide angle, the basket tilting stops. At this position the completely cooked product slides down into the food dispensing chute 185 to be directed to the cup (not shown). The function of the upper indexing finger 130 which is pivotably attached by means of pin 115 is to ensure the perfect alignment of discharge lip 175 and the rotating partition walls 210.

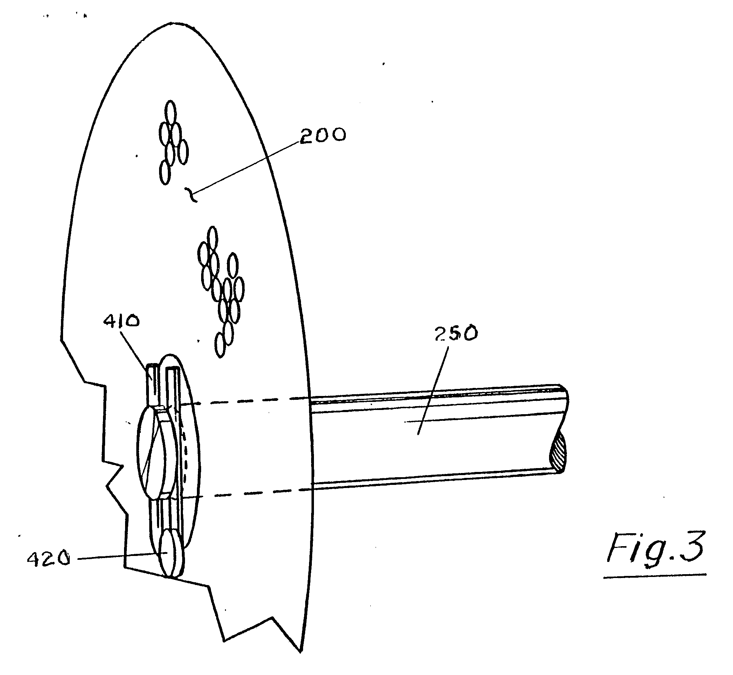

The revolving motion of 90 degrees of the basket is obtained by using a shaft 250 having a squared groove end. Thus, the combination of said shaft with squared groove 250 (as shown in figure 3) with a hair-pin shaped spring 410 subdivides the 360 degrees rotation of the basket in four stages.

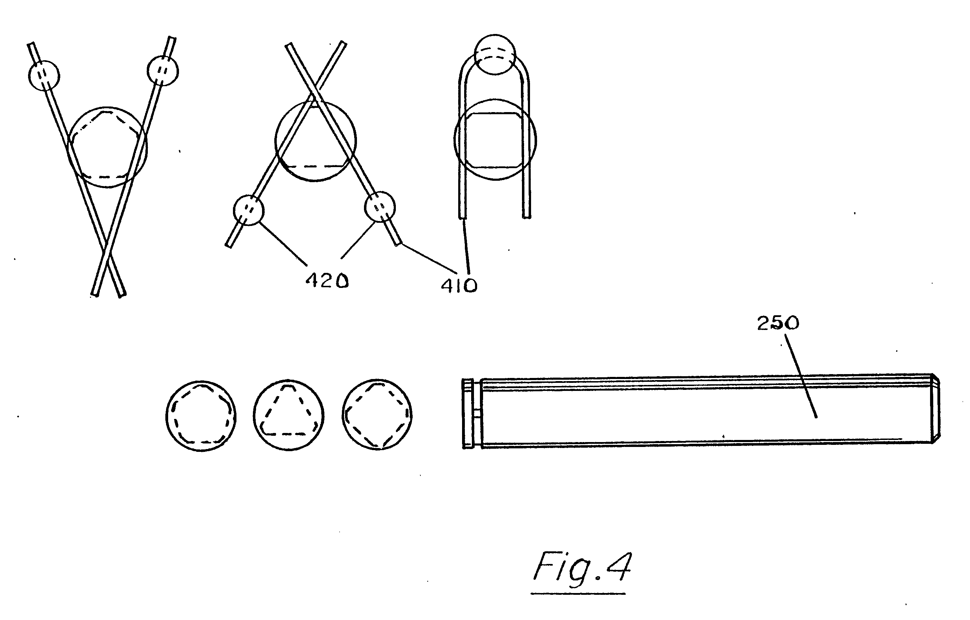

In another example, and to obtain a 360 degrees rotation divided in three stages, a shaft having a triangular groove end may be combined with a specially shaped hair-pin as shown in Figure 4. Other combinations are also shown in said Figure 4.

By using a combination of a shaft having a grooved end along with a corresponding hair-pin spring, the rotation is complete and the compartments of the revolving basket and the chute are always aligned.

Said hair-pin shaped spring 410 is held in place by a fastening 420 which is riveted to the side of the basket's circular perforated plate 200.

Even if the invention has been described with particular embodiments, it must be understood that same may take other forms without departing from the scope and spirit of the invention.

## Claims

1. Apparatus for cooking measured quantities of food products in a hot liquid and distributing same comprising :
- a perforated basket divided into at least two sectors each intended to contain one measured quantity of said food products ;
- a chute connected to said basket ;
- resilient means ;
- a shaft whereon the sectors are fixed having one extremity which is specially shaped to accommodate said resilient means ;
- means for imparting rotation of said perforated basket about said shaft ;
- means for successively immersing and withdrawing said perforated basket in said hot liquide ;
wherein the combination of said shaft with said resilient means forces the perforated basket to rotate through exactly one sector each time said rotation means are actuated.

2. Apparatus according to claim 1 wherein said one extremity of said shaft is squared and said resilient means is "U" shaped.

3. An apparatus according to claim 1 or 2 wherein said basket has two sides and said rotation means comprises at least one locator pin and an indexing finger wherein said locator pin comes into contact with said indexing finger when said perforated basket is withdrawn from the liquid.

4. Apparatus according to claim 1, 2 or 3 wherein said perforated basket is cylindrical.

5. Apparatus according to claim 1, 2 or 3 wherein said perforated basket is cylindrical and further comprises a hoop and a retaining ring, said retaining ring is fixed to the outside of said hoop in order to ensure perfectly circular shape for the trouble-free rotation of the basket.

6. Apparatus according to claim 1, 2 or 3 wherein said perforated basket is cylindrical and further comprises a hoop and a retaining ring, said retaining ring is fixed to the outside of said hoop in order to ensure perfectly circular shape for the trouble-free rotation of the basket, and said apparatus being used in a vending machine.

7. Apparatus according to claim 1, 2 or 3 wherein said perforated basket is cylindrical and further comprises a hoop and a retaining ring, said retaining ring is fixed to the outside of said hoop in order to ensure perfectly circular shape for the trouble-free rotation of the basket, and said apparatus being used in a vending machine, said hot liquid being cooking oil.

8. Apparatus according to claim 1 wherein said one extremity of said shaft is triangular and said resilient means has a corresponding shape.

9. Apparatus according to claim 1 wherein said one extremity of said shaft is pentagonal and said resilient means has a corresponding shape.

4

*Fig. 1*

Fig.2

Fig.3

200

250

410

420

420  410

250

*Fig.4*

EP 0 313 037 A2